# EUROPEAN PATENT APPLICATION

(11) **EP 0 955 187 A1**
(43) Date of publication of application: **10.11.1999**
(21) Application number: 98830279.0
(22) Date of filing: 08.05.1998
(51) Int. Cl.: B60G 5/04

(54) **Independent suspension, particularly for tracked vehicles**

(71) Applicant: Prinoth S.r.l., 39040 Laion (BZ) (IT)
(72) Inventor: Rampini, Franco, 39040 Laion (Bolzano) (IT); Rampini, Stefano, 39040 Laion (Bolzano) (IT)
(74) Representative: Iannone, Carlo Luigi

(57) **Abstract**

The invention concerns an independent suspension system, particularly for tracked vehicles, for a pair of wheel axles, comprising two swinging arms (1), one for each axle, fixedly connected at one end with at least one rotation axis (2) passing through the vehicle frame, and at the other end coupled with said axle, support elements (4), fixedly coupled with said at least one rotation axis (2) and on which an elastic element (5; 12) is coupled, said elastic element acting on both the swinging arms (1).

## Description

The present invention relates to independent suspensions, particularly for tracked vehicles.

More particularly, the invention concerns a device of the above kind suitable to realise a suspension system allowing to obtain an optimum suspension action, particularly in case of particularly steep and disarranged grounds.

The solution suggested according to the present invention has been particularly realised for tracked wheels, but obviously it can be also employed for other kinds of terrestrial vehicles.

Main object of the present invention is that of making the suspension of the "rocking arm" kind that are often employed on tracked vehicles and like.

At present, this kind of suspensions is realised in such a way to allow to a pair of wheels to rotate only about an horizontal axis, but without allowing the deformation of the whole rocking arm, so that a suitable absorption of the shocks due to the ground upward projecting bumps.

Another object of the present invention is that of realising a suspension system allowing to use a rigid frame, without the need of using an articulated frame.

Still another object of the present invention is that of realising a suspension system allowing to obtain a large bump position or relevant movement of one wheel with respect to the other.

Furthermore, the solution proposed according to the present invention allows to distribute the load between the two wheels.

Moreover, the suspension system according to the present invention, when employed on not-tracked vehicles, also allows to vary the height.

It is therefore specific object of the present invention an independent suspension system, particularly for tracked vehicles, for a pair of wheel axles, comprising two swinging arms, one for each axle, fixedly connected at one end with at least one rotation axis passing through the vehicle frame, and at the other end coupled with said axle, support elements, fixedly coupled with said at least one rotation axis and on which an elastic element is coupled, said elastic element acting on both the swinging arms.

Preferably, according to the invention, two distinct rotation axles are provided, said axles passing through the frame.

Still according to the invention, the coupling between the swinging arm and the axle is realised by hubs provided with bearings.

Always according to the invention, upper and/or lower end of the stroke element scan be provided to limit the oscillation of the swinging axis, interfering with end of the stroke stoppers fixedly connected with said swinging arms.

According to a preferred embodiment of the suspension system according to the invention, said elastic element can be comprised of a hydraulic cylinder, eventually provided with a hydropneumatic accumulator.

Eventually, a throttling element can be provided in parallel with said hydraulic cylinder.

Furthermore, according to the invention, said elastic element can be comprised of a pneumatic cylinder, eventually provided with a hydropneumatic accumulator.

Always according to the invention, said elastic element can be comprised of a cylinder within which elastic means with adjustable hardness are provided.

Still according to the invention, said elastic element can be comprised of a spring.

Furthermore, according to the invention, two pairs of support elements can be provided.

The present invention will be now described, for illustrative but not limitative purposes, according to its preferred embodiments, with particular reference to the figures of the enclosed drawings, wherein:
figure 1 is a top view of a first embodiment of the suspension system according to the invention;
figure 2 is a lateral view of the suspension system of figure 1;
figure 3 is a section view of the suspension system of figure 1;
figure 4 is a lateral view of a second embodiment of the suspension system according to the invention;
figure 5 is a lateral view of a third embodiment of the suspension system according to the invention;
figure 6 is a lateral view of a fourth embodiment of the suspension system according to the invention; and
figure 7 is a section view of a particular of a further embodiment of the suspension system according to the invention.

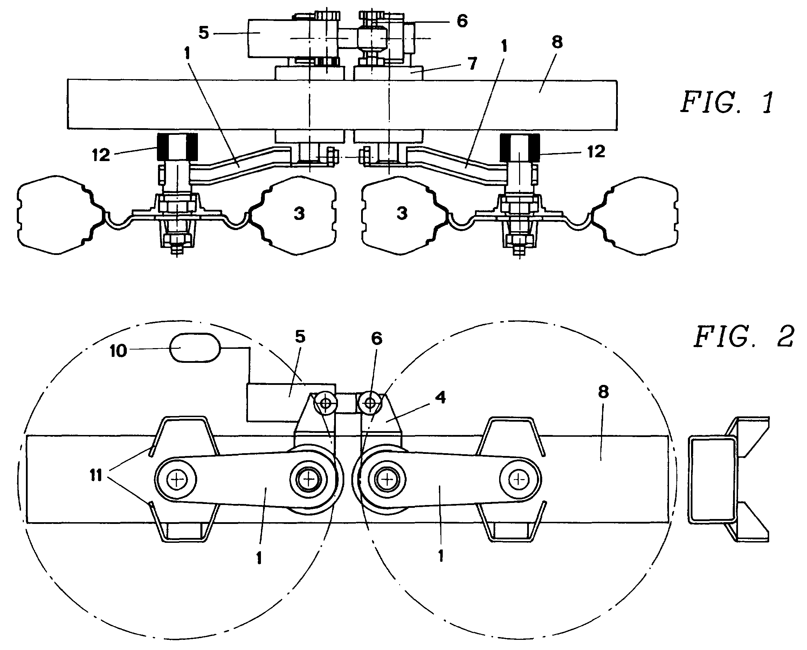

Coming now to observe figures 1 - 3, it is shown an embodiment of the suspension system according to the present invention.

The suspension according to the invention provides two crank arms 1, fixedly coupled on one end to rotation axes 2, and on the other side supporting the driving wheels 3 by hubs provided with bearings, which are not part of the invention.

Supports 4 are fixedly coupled to the axis 2 on which a hydraulic cylinder 5 is constrained by pins 6.

Said rotation axes 2 can oscillate on spherical supports 7 which constrained to the frame 8 by a support bushing 9.

In the solution shown in figures 1 - 3, it is provided a hydropneumatic accumulator 10 connected to the piston 5 in such a way that the piston 5 is no more longitudinally rigid but instead can be axially deformed under the action of outer forces.

Eventually, an hydraulic throttling element provided in parallel, can allow to the piston to behave as viscoelastic element and not only as elastic element.

Furthermore, upper and lower end of the stroke elements 11 are provided, interfering with end of the stroke stoppers 12 fixedly connected to the crank arms 1. In this way the maximum bump position of the suspensions is limited; in other words it is limited the rotation angle about the axis 2 of the arms 1.

In the following the operation of the suspension according to the invention shown in figures 1 -3 will be described.

When a ground upward projecting bump makes the arm 1, which for the advance direction is the front arm, rotating upward (or downward), the other arm 1 acting as rear arm will be induced to rotate downward (or upward), by the elastic action that will be transmitted from the front arm 1 by the cylinder 5. The latter behaves as a perfectly elastic member and with a rigidity easily variable since it is a direct function of the pre-loading pressure of the accumulator 10.

On the contrary with respect to what happens in a traditional rocking arm suspension, wherein the angle between the two arms 1 is fixed and invariable, in this case said angle is a function both of the amount of the stress imposed by the first arm 1 and of the pre-loading pressure of the accumulator 12, said pressure being easily and immediately modified also during the running. According to the needing, drawing the oil from the general hydraulic system for the movement of the vehicle and of the other board accessories.

Axes 2 are constrained to the frame with a rotoidal realised by a pair of coaxial spherical articulated joints.

By this kind of solution, since axes 2 do never make complete rotations but limit to oscillate about its own axis, the use of swinging articulated joints 7 provides the double advantage of using suitable manufactured elements to oscillate under strong loads, and being spherical they do not require precise workings of the spherical supports for the connection with the structure of the frame 8.

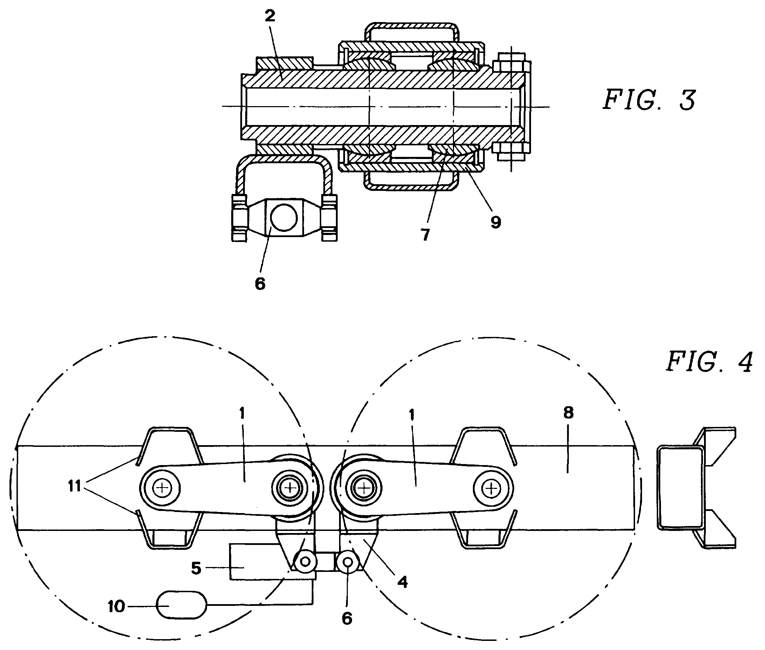

Coming now to describe the embodiments shown in figures 4 - 6, the same reference numbers will be used for the parts corresponding to those corresponding to the parts of the embodiment of figures 1 -3.

The solution of figure 4 provides that the supports 4 are placed downward instead of upward, so that the piston 5 must work under traction and not under compression. Consequently, accumulator 10 will have to be connected with the other part of the piston 5.

Moreover, the operation is perfectly identical to the one of figures 1 -3.

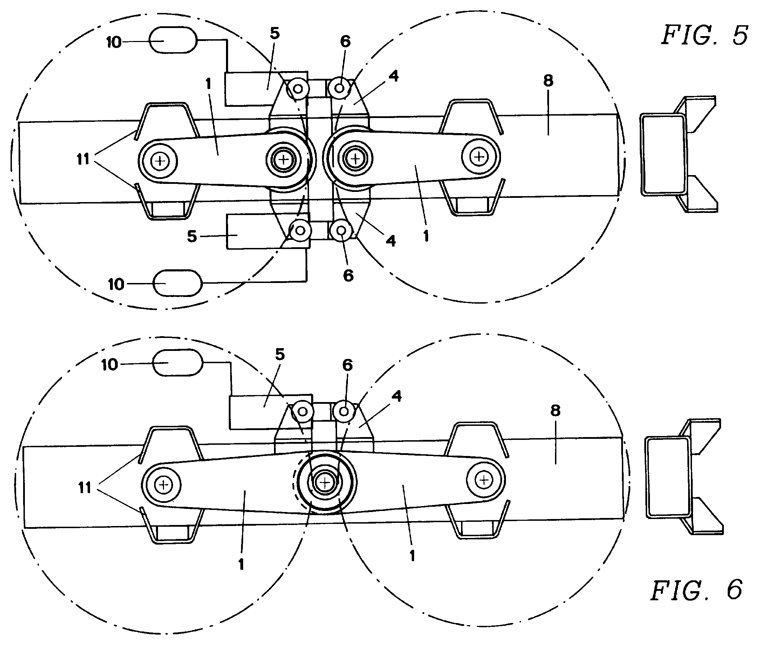

In figure 5, each arm 1 has two supports 4 for the elastic elements and not only one, and consequently two are the elastic elements 5, indicated in an illustrative but not limitative way as hydraulic pistons, which will work one under traction and the other one under compression.

Finally, solution of figure 6 will provide a distance between the two rotation axis 2 substantially null, so that the two rotation axis substantially coincide. It generally involves the lengthening of the two arms 1 and a different design of the two supports 4, but for any other respect the operation of the suspension is unchanged.

Obviously, the solution shown in the various previous figures can all be realised without hydropneumatic accumulator.

Furthermore, the same can be provided or not with an electronic control.

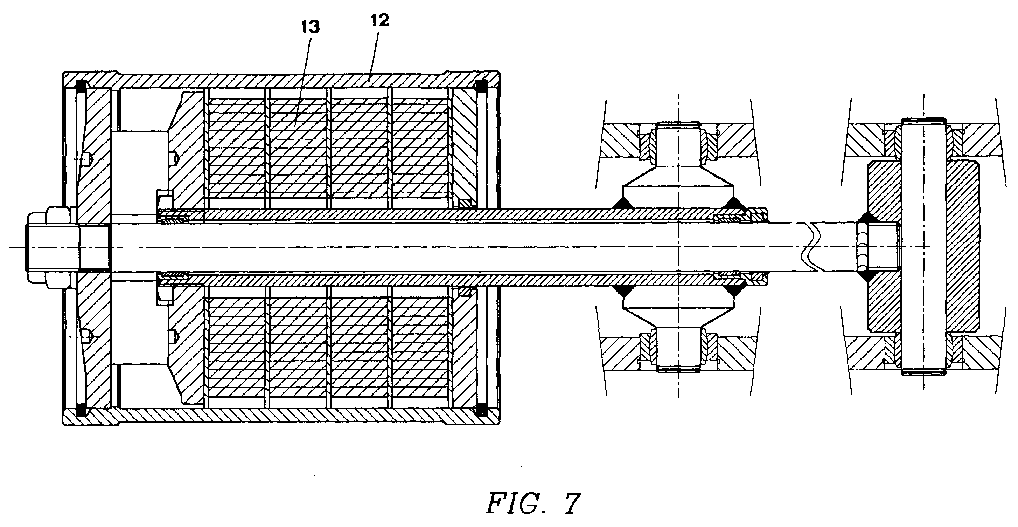

Coming now to observe figure 7, a variation of the system shown in the preceding figures is shown wherein the hydraulic cylinder is replaced by a cylinder 12, within which elastic rubber elements 13 are provided, the hardness of which can be adjusted in function of the specific needing.

A further modification not shown in the drawings is that wherein the hydraulic cylinder 5 is replaced by any other kind of elastic element having a sufficient rigidity, such as a steel spring or a pneumatic cylinder having suitable dimensions.

In fact, it must be evident that it is not the kind of elastic element employed characterising the inventive concept of the present finding.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Independent suspension system, particularly for tracked vehicles, for a pair of wheel axles, characterised in that it comprises two swinging arms, one for each axle, fixedly connected at one end with at least one rotation axis passing through the vehicle frame, and at the other end coupled with said axle, support elements, fixedly coupled with said at least one rotation axis and on which an elastic element is coupled, said elastic element acting on both the swinging arms.

2. Independent suspension system according to claim 1, characterised in that two distinct rotation axles are provided, said axles passing through the frame.

3. Independent suspension system according to claim 1 or 2, characterised in that the coupling between the swinging arm and the axle is realised by hubs provided with bearings.

4. Independent suspension system according to one of the preceding claims, characterised in that upper and/or lower end of the stroke elements are provided to limit the oscillation of the swinging axis, interfering with end of the stroke stoppers fixedly connected with said swinging arms.

5. Independent suspension system according to one of the preceding claims, characterised in that said elastic element is comprised of a hydraulic cylinder.

6. Independent suspension system according to claim 5, characterised in that, said hydraulic cylinder is provided with a hydropneumatic accumulator.

7. Independent suspension system according to claim 5 or 6, characterised in that a throttling element is provided in parallel with said hydraulic cylinder.

8. Independent suspension system according to one of the preceding claims 1 - 4, characterised in that said elastic element is comprised of a pneumatic cylinder.

9. Independent suspension system according to claim 8, characterised in that said pneumatic cylinder is provided with a hydropneumatic accumulator.

10. Independent suspension system according to one of the preceding claims 1 - 4, characterised in that said elastic element is comprised of a cylinder within which elastic means with adjustable hardness are provided.

11. Independent suspension system according to one of the preceding claims 1 - 4, characterised in that said elastic element is comprised of a spring.

12. Independent suspension system according to one of the preceding claims, characterised in that two pairs of support elements are provided.
